# EUROPEAN PATENT APPLICATION

(11) **EP 4 545 477 A1**
(43) Date of publication of application: **30.04.2025**
(21) Application number: 22949135.2
(22) Date of filing: 09.12.2022
(51) Int. Cl.: C01B 25/37

(54) **METHOD FOR PREPARING IRON PHOSPHATE FROM IRON PHOSPHORUS SLAG, IRON PHOSPHATE AND APPLICATION OF IRON PHOSPHATE**

(30) Priority: 27.06.2022 CN 202210735393
(71) Applicant: Hubei Hongrun High-Tech New Materials Co., Ltd., Ezhou, Hubei 436070 (CN)
(72) Inventor: XU, Shanwan, Ezhou City, Hubei 436070 (CN); LI, Jin, Ezhou City, Hubei 436070 (CN); LI, Wenjie, Ezhou City, Hubei 436070 (CN); GUO, Miyan, Ezhou City, Hubei 436070 (CN)
(74) Representative: Michalski Hüttermann & Partner Patentanwälte mbB
(86) International application number: PCT/CN2022/138064
(87) International publication number: WO 2024/001059

(57) **Abstract**

A method for preparing iron phosphate from an iron phosphorus slag includes: adding the iron phosphorus slag into an alkaline solution to carry out a reaction followed by a solid-liquid separation to obtain a residue and a first filtrate containing meta-aluminate ion and phosphate ion; adding an acid solution into the first filtrate to carry out an aluminum-removing reaction followed by a solid-liquid separation to obtain a second filtrate containing phosphate ion; mixing the residue with an acid solution to carry out a carbon-removing reaction followed by a solid-liquid separation to obtain a carbon residue and a third filtrate containing iron ion, titanium ion, and copper ion; adding metallic iron into the third filtrate to carry out a titanium and copper-removing reaction followed by a solid-liquid separation to obtain a fourth filtrate containing ferrous ion; mixing an oxidant, the second filtrate, and the fourth filtrate to carry out a reaction followed by a solid-liquid separation and a sintering process in sequence to obtain the iron phosphate.

## Description

### CROSS-REFERENCE TO RELATED APPLICATIONS

This application claims priority to Chinese Patent Application No. 202210735393.5, filed on June 27, 2022, entitled "METHOD FOR PREPARING IRON PHOSPHATE FROM IRON PHOSPHORUS SLAG, IRON PHOSPHATE, AND APPLICATION OF IRON PHOSPHATE", the content of which is hereby incorporated by reference in its entirety.

### TECHNICAL FIELD

The present application relates to the technical field of lithium ion batteries, in particular to a method for preparing iron phosphate from an iron phosphorus slag, iron phosphate, and an application thereof.

### BACKGROUND

In recent years, with the development of the new energy vehicles in China, the sale of the power batteries, the core components of the new energy vehicles, has been increasing year by year, leading to a large number of waste batteries. Conventional physical methods struggle to restore the performance of the waste lithium iron phosphate. Typically, the lithium element with high added value is preferentially extracted in the recycling of the lithium iron phosphate batteries, leaving behind a large number of iron phosphorus slags which is generally treated as low-value industrial waste or filler in cement plants. As a substantial amount of iron and phosphorus elements in the iron phosphorus slag is underutilized and unrecycled, there is a huge waste of resources. Hence, the development of a method for recovering and preparing iron phosphate, which is simple in process, easy to control, and environmentally friendly, is important for establishing a green industrial chain.

Currently, the main problem for recycling the iron phosphorus slag lies in the high content of metal impurities. The existing recycling methods mainly focus on the removal of the aluminum impurity, with the removal of other impurity elements such as titanium and copper mostly uninvolved.

For example, the patent application CN113753873A discloses a method for preparing petal-shaped iron phosphate with low aluminum impurity from waste iron phosphorus slag, which selectively removes aluminum based on the difference in solubility between the aluminum impurity and iron phosphate in the iron phosphorus slag. This method uses an acid system, only involves the removal of the aluminum impurity, and is unable to remove the titanium impurity and copper impurity introduced into the iron phosphorus slag. As a result, the prepared iron phosphate product contains a large number of titanium impurity and copper impurity, leading to some limitations.

Therefore, it is of great significance to effectively remove the impurity metal elements from the iron phosphorus slag at a low cost and to prepare iron phosphate with a low impurity content.

In view of this, the present disclosure is proposed.

### SUMMARY

A first object of the present application is to provide a method of preparing iron phosphate from an iron phosphorus slag. The method can effectively remove an aluminum impurity, a carbon impurity, a titanium impurity, and a copper impurity from the iron phosphorus slag to obtain ion phosphate with a low impurity content. In addition, the method further has the advantages of simple process, easy control, and low cost.

A second object of the present application is to provide iron phosphate with a low impurity content and a high quality.

A third object of the present application is to provide a cathode material for a lithium ion battery.

In order to realize the above objects of the present application, the following technical solutions are specifically adopted.

The present application provides a method for preparing (anhydrous) iron phosphate from an iron phosphorus slag, including the following steps.
(a) The iron phosphorus slag is added into an alkaline solution (an aqueous solution containing an alkali) to allow aluminum hydroxide and metallic aluminum (elementary aluminum) in the iron phosphorus slag to react with the alkaline solution so as to be dissolved, and to allow iron in the iron phosphorus slag to react with the hydroxide ion in the alkaline solution to produce an iron hydroxide precipitate. A solid-liquid separation is performed after the reaction is finished to obtain a residue and a first filtrate containing (the term "containing" used in the present application has the same meaning as the term "comprising" and means that other ions or components may be comprised) a meta-aluminate ion and a phosphate ion.

The iron phosphorus slag includes a waste material obtained from a waste lithium iron phosphate battery after the extraction of lithium (lithium element). The iron phosphorus slag includes iron phosphate, aluminum hydroxide, metallic aluminum, carbon, metallic copper, copper oxide, and titanium oxide.

The residue includes iron hydroxide, carbon (elementary substance), metallic copper (elementary copper), copper oxide, and titanium oxide as main components.

The anion in the first filtrate includes the meta-aluminate ion, the phosphate ion, and the hydroxide ion.

The reaction scheme in the step (a) is as follows:

FePO₄+3OH⁻→Fe(OH)₃+PO₄³⁻;

Al(OH)₃+OH⁻→AlO₂⁻+2H₂O;

2Al+2H₂O+2OH⁻→2AlO₂⁻+3H₂↑.

This step enables the separation of phosphorus and aluminum elements from iron, titanium, copper, and carbon elements in the iron phosphorus slag, which facilitates the subsequent step-by-step removal of impurities and the synthetic reaction of iron phosphate.

Then, an acid solution (an aqueous solution containing an acid) is added into the first filtrate containing the meta-aluminate ion and the phosphate ion to carry out an aluminum-removing reaction. The meta-aluminate ion in the first filtrate reacts with the hydrogen ion in the acid solution to produce an aluminum hydroxide precipitate. A solid-liquid separation is performed after the aluminum-removing reaction is finished to obtain a second filtrate containing the phosphate ion for subsequent use.

An aluminum hydroxide residue is also obtained while obtaining the second filtrate containing the phosphate ion. In this step, the aluminum impurity is precipitated in a form of aluminum hydroxide precipitate, so that the purpose of removing aluminum can be achieved after the solid-liquid separation.

The reaction scheme in this step is as follows: H₂O+AlO₂⁻+H⁺→Al(OH)₃↓.

The anion in the second filtrate mainly includes the phosphate ion.

(b) The residue obtained in the step (a) is mixed with an acid solution to carry out a carbon-removing reaction followed by a solid-liquid separation to obtain a carbon residue (which includes elementary carbon and elementary copper as main components) and a third filtrate containing an iron ion, a titanium ion, and a copper ion.

Wherein the iron hydroxide precipitate and the copper oxide in the residue react with the acid so as to be dissolved to produce the iron ion and the copper ion. At the same time, a part of the titanium oxide in the residue is dissolved in the acid solution, and the other part (undissolved titanium oxide) of the titanium oxide in the residue as well as the elementary carbon and elementary copper are precipitated as precipitates, and carbon is separated from iron and titanium after the solid-liquid separation.

(c) Metallic iron (elementary iron such as iron powder or iron sheet) is added into the third filtrate containing the iron ion, the titanium ion, and the copper ion to carry out a titanium and copper-removing reaction followed by a solid-liquid separation to obtain a fourth filtrate containing a ferrous ion.

A mixed residue with metallic copper (elementary copper) and meta-titanic acid (TiO(OH)₂, also known as hydrated titanium dioxide) as main components is also obtained while obtaining the fourth filtrate containing the ferrous ion.

The reaction scheme in the step (c) is as follows:

Fe+Cu²⁺→Cu+Fe²⁺;

Fe+2H⁺→Fe²⁺+H₂↑;

Ti⁴⁺+3H₂O-TiO(OH)₂+4H⁺.

In the step (c), by adding the metallic iron, not only the residual acid in the third filtrate can be neutralized to increase the pH of the third filtrate, but also the content of the ferrous ion in the third filtrate can be increased. Moreover, the titanium impurity forms the meta-titanic acid precipitate by hydrolysis, achieving the purpose of removing titanium, and the copper impurity is subjected to a replacement reaction, achieving the purpose of removing copper. Consequently, the separation of the copper impurity and the titanium impurity from iron can be achieved by the solid-liquid separation in the step (c).

In some specific embodiments of the present application, the metallic iron can be added in an excessive amount in the step (c) to make the reaction sufficient, at which time the mixed residue still contains a small amount of metallic iron.

(d) An oxidant, the second filtrate containing the phosphate ion obtained in the step (a), and the fourth filtrate containing the ferrous ion obtained in the step (c) are mixed to carry out a reaction. After the reaction is finished, a solid-liquid separation and a sintering process are performed in sequence to obtain iron phosphate.

This iron phosphate refers to anhydrous iron phosphate.

The reaction principle in the step (d) includes the reaction of the ferrous ion and the oxidant to produce a ferric ion. When the oxidant is a hydrogen peroxide aqueous solution, the reaction equation is as follows:

2Fe²⁺+H₂O₂+2H⁺→2Fe³⁺+2H₂O;

Fe³⁺+PO₄³⁻+2H₂O-FePO₄-2H₂O;

FePO₄-2H₂O-FePO₄+2H₂O.

The present application uses the waste iron phosphorus slag as the raw material, which has the advantages of low cost, avoiding waste of resources, and protecting the environment.

Moreover, the method can effectively remove aluminum, carbon, titanium, and copper impurities from the iron phosphorus slag. After the removal of aluminum, carbon, titanium, and copper, the prepared iron phosphate has a low impurity content, a high quality, and a high added value, which can be used as a precursor for power lithium iron phosphate.

Preferably, in the step (a), a mass ratio of the iron phosphorus slag to the alkali solution is 1:3 to 1: 10, including, but not limited to, any point value of or a range between any two point values of 1:3, 1:4, 1:5, 1:6, 1:7, 1:8, 1:9, 1:10, more preferably, 1:4 to 1:6.

Preferably, in the step (a), a mass fraction of the alkali solution (i.e., a mass fraction of the alkali in the aqueous solution containing the alkali) is 8% to 20%, including, but not limited to, any point value of or a range between any two point values of 9%, 10%, 11%, 12%, 13%, 14%, 15%, 16%, 17%, 18%, 19%.

Preferably, in the step (a), the alkali solution includes a sodium hydroxide solution and/or a potassium hydroxide solution.

Preferably, in the step (a), during the reaction of the iron phosphorus slag with the alkali solution, a temperature of the mixture material is 30°C to 80°C, including, but not limited to, any point value of or a range between any two point values of 35°C, 40°C, 45°C, 50°C, 55°C, 60°C, 65°C, 70°C, 75°C, 78°C. A time of the reaction is 1 to 3 h, including, but not limited to, any point value of or a range between any two point values of 1.5 h, 2 h, 2.5 h.

The above parameters used are conducive to promoting the dissolution of the aluminum hydroxide and the metallic aluminum and thus improving the efficiency of aluminum removal.

Preferably, in the step (a), the acid used in the acid solution includes at least one of sulfuric acid, hydrochloric acid, phosphoric acid, or nitric acid, more preferably, phosphoric acid.

The phosphate ion in the phosphoric acid can be used as a raw material for the subsequent synthetic reaction of iron phosphate.

Preferably, in the step (a), a mass fraction of the acid solution (i.e., a mass fraction of the acid in the aqueous solution containing the acid) is 30% to 85%, including, but not limited to, any point value of or a range between any two point values of 35%, 40%, 45%, 50%, 55%, 60%, 65%, 70%, 75%, 80%.

Preferably, in the step (a), the acid solution is added until a pH of the mixture material is 5.0 to 7.5, including, but not limited to, any point value of or a range between any two point values of 5.2, 5.5, 5.8, 6.0, 6.3, 6.5, 6.8, 7.0, 7.2, more preferably, 6.8 to 7.1.

In some specific embodiments of the present application, in the step (a), the temperature of the mixture material during the aluminum-removing reaction is 15 to 80°C, including, but not limited to, any point value of or a range between any two point values of 20°C, 25°C, 30°C, 35°C, 40°C, 45°C, 50°C, 55°C, 60°C, 65°C, 70°C, 75°C.

The above parameters used are conducive to promoting the precipitation of the aluminum hydroxide, thereby improving the aluminum removing effect.

Preferably, in the step (b), a molar ratio of the iron element in the residue to the hydrogen ion in the acid solution is 1:3.1 to 1:4; including, but not limited to, any point value of or a range between any two point values of 1:3.2, 1:3.3, 1:3.4, 1:3.5, 1:3.6, 1:3.7, 1:3.8, 1:3.9.

Preferably, in the step (b), the acid includes at least one of sulfuric acid, hydrochloric acid, nitric acid, or phosphoric acid; more preferably, at least one of sulfuric acid, hydrochloric acid, or nitric acid, which are less costly.

Preferably, in the step (b), a molality of the acid solution (i.e., a molality of the acid in the aqueous solution containing the acid) is 1 to 3 mol/kg, including, but not limited to, any point value of or a range between any two point values of 1.3 mol/kg, 1.5 mol/kg, 1.8 mol/kg, 2.0 mol/kg, 2.3 mol/kg, 2.5 mol/kg, 2.8 mol/kg, 3 mol/kg.

Preferably, in the step (b), the temperature of the mixture material during the carbon-removing reaction is 60 to 80°C, including, but not limited to, any point value of or a range between any two point values of 63°C, 65°C, 68°C, 70°C, 73°C, 75°C, 78°C.

Preferably, in the step (b), a time of the carbon-removing reaction is 1 to 3 h, including, but not limited to, any point value of or a range between any two point values of 1.5 h, 2 h, 2.5 h, 3 h, more preferably, 1 to 1.5 h.

The above parameters used are conductive to the separation of carbon from iron, titanium, and copper.

Preferably, in the step (c), the temperature of the mixture material during the titanium and copper-removing reaction is 75 to 85°C, including, but not limited to, any point value of or a range between any two point values of 76°C, 77°C, 78°C, 79°C, 80°C, 82°C, 83°C, 84°C.

Preferably, in the step (c), the solid-liquid separation is performed once the mixture material in the titanium and copper-removing reaction has a pH of 2 to 4.2, including, but not limited to, any point value of or a range between any two point values of 2.3, 2.5, 2.8, 3.0, 3.2, 3.5, 3.7, 3.9.

The above parameters used are conductive to the separation of the copper impurity and the titanium impurity from iron.

Preferably, in the step (d), the oxidant includes at least one of a hydrogen peroxide aqueous solution, sodium peroxide, potassium peroxide, sodium persulfate, ammonium persulfate, or potassium persulfate, more preferably, a hydrogen peroxide aqueous solution.

Preferably, in the step (d), a molar ratio of the ferrous ion in the fourth filtrate to the hydrogen peroxide in the hydrogen peroxide aqueous solution is 1:0.55 to 1:0.75, including, but not limited to, any point value of or a range between any two point values of 1:0.58, 1:0.6, 1:0.62, 1:0.65, 1:0.68, 1:0.7, 1:0.73. Such molar ratio enables sufficient oxidation of the ferrous ion while saving costs.

Preferably, in the step (d), a molar ratio of the phosphate ion in the second filtrate to the ferrous ion in the fourth filtrate is 1.05:1 to 1.5:1, including, but not limited to, any point value of or a range between any two point values of 1.1:1, 1.15:1, 1.2:1, 1.25:1, 1.3:1, 1.35:1, 1.4:1, 1.45:1.

Preferably, in the step (d), the temperature of the mixture material during the reaction is 80 to 95°C, including, but not limited to, any point value of or a range between any two point values of 83°C, 85°C, 88°C, 90°C, 93°C.

The above molar ratios and the above reaction temperature are conductive to obtaining iron phosphate with a higher quality.

Preferably, in the step (d), the time of the reaction is 2 to 6 h, including, but not limited to, any point value of or a range between any two point values of 2 h, 3 h, 4 h, 5 h, 6 h.

Preferably, in the step (d), a temperature of the sintering process is 550 to 700°C, including, but not limited to, any point value of or a range between any two point values of 570°C, 590°C, 600°C, 620°C, 650°C, 680°C, 700°C.

The sintering process is for removing water of crystallization from iron phosphate. The product obtained before the sintering process is iron phosphate dihydrate which is sintered and dehydrated at high temperature to obtain the anhydrous iron phosphate.

In some specific embodiments of the present application, after the solid-liquid separation and before the sintering process, a step of washing and drying a solid material obtained by the solid-liquid separation is further included.

The present application further provides iron phosphate, which is prepared by the method for preparing iron phosphate from the iron phosphorus slag as described above.

The iron phosphate has a low impurity content, a high quality, and a low cost.

Preferably, the iron phosphate has a ratio of iron to phosphorus of 0.96 to 0.98, including, but not limited to, any point value of or a range between any two point values of 0.963, 0.964, 0.965, 0.968, 097, 0.972, 0.974, 0.975, 0.978.

The present application further provides a cathode material for a lithium ion battery, including the iron phosphate as described above.

The cost can be controlled to be low by using the iron phosphate as described above. Moreover, the iron phosphate with the low impurity content is conductive to improving the electrochemical performance of the lithium ion battery.

Compared with the prior art, the present application provides the following beneficial effects.
(1) By the method for preparing iron phosphate from the iron phosphorus slag provided by the present application, the aluminum, carbon, titanium, and copper impurities can be effectively removed from the iron phosphorus slag through a series of impurity-removing operations, and the resulting iron phosphate has a low impurity content.
(2) The method for preparing iron phosphate from iron phosphorus slag provided by the present application uses waste iron phosphorus slag as raw material, which has the advantages of low cost, avoiding waste of resources, and protecting the environment.

### BRIEF DESCRIPTION OF THE DRAWINGS

In order to illustrate the specific embodiments of the present application or the technical solutions in the prior art more clearly, the drawings used in the description of the specific embodiments or the prior art will be described briefly. It is evident that the following described figures are for some embodiments of the present application, and other figures can be derived by those of ordinary skill in the art without any creative effort.
FIG. 1 is an XRD spectrum of anhydrous iron phosphate obtained in Example 1 of the present application.
FIG. 2 is a SEM image of the anhydrous iron phosphate obtained in Example 1 of the present application with a magnification of 50,000 times.
FIG. 3 is a SEM image of the anhydrous iron phosphate obtained in Example 1 of the present application with a magnification of 200,000 times.

### DETAILED DESCRIPTION

The technical solutions of the present application will be described clearly and completely as follows in conjunction with the drawings and the specific embodiments. It is to be understood by those skilled in the art that the described embodiments are only a few but not all of embodiments of the present application, which are merely used to illustrate the present application but not to limit the scope of the present application. All other embodiments obtained by those skilled in the art based on these embodiments of the present application without any creative work belong to the scope of protection of the present application. The specific conditions which were not indicated in the specific examples, are in accordance with general conditions or conditions recommended by the manufacturer. The reagents or equipment which did not indicate manufacturers, are conventional products which can be obtained from the market.

The iron phosphorus slag used in the following examples of the present application and comparative examples is a waste material obtained from a waste lithium iron phosphate battery after the extraction of lithium. The iron phosphorus slag includes iron phosphate, aluminum hydroxide, metallic aluminum, carbon, metallic copper, copper oxide, and titanium oxide as main components.

### Example 1

A method for preparing iron phosphate from an iron phosphorus slag in this example includes the following steps:
(1) 100 g iron phosphorus slag was taken, placed into a NaOH solution with a mass fraction of 14%, with a mass ratio of the iron phosphorus slag to the NaOH solution being 1:3, and pulped to be dispersed to carry out a rection at a temperature of 50°C for 2 h, followed by a solid-liquid separation, to obtain a residue and a first filtrate containing a meta-aluminate ion and a phosphate ion.
(2) Phosphoric acid with a mass fraction of 85% was added into the first filtrate containing the meta-aluminate ion and the phosphate ion obtained in the step (1), with the pH of the mixture material adjusted to 7.0±0.1, to carry out an aluminum-removing reaction followed by a solid-liquid separation to obtain an aluminum hydroxide residue and a second filtrate containing the phosphate ion (for subsequent use).
(3) The residue obtained in the step (1) was added and dissolved into a sulfuric acid solution with a molality of 3 mol/kg, with a molar ratio of the iron element in the residue to the hydrogen ion in the sulfuric acid solution being 1:3.6, to carry out a carbon-removing rection at a temperature of 80°C for 1 h, followed by a solid-liquid separation, to obtain a carbon residue and a third filtrate containing an iron ion, a titanium ion, and a copper ion.
(4) Iron powder was added to the third filtrate containing the iron ion, the titanium ion, and the copper ion obtained in the step (3) to carry out a titanium and copper-removing rection at a temperature of 80°C until the pH of the mixture material reached 4.0±0.2, followed by a solid-liquid separation, to obtain a fourth filtrate containing a ferrous ion and a mixed residue containing metallic copper and meta-titanic acid.
(5) A hydrogen peroxide aqueous solution was mixed well with the second filtrate containing the phosphate ion obtained in the step (2) to prepare a phosphate solution, which was then added dropwise into the fourth filtrate containing the ferrous ion obtained in the step (4), with a molar ratio of the phosphate ion in the second filtrate to the ferrous ion in the fourth filtrate being 1.1:1 and a molar ratio of the ferrous ion in the fourth filtrate to the hydrogen peroxide in the hydrogen peroxide aqueous solution being 1:0.6, to carry out a synthetic reaction of iron phosphate at a temperature of 95°C for 3h followed by a solid-liquid separation. Then the solid material was washed, dried, and sintered (a temperature of sintering being 600°C) to obtain anhydrous iron phosphate with a ratio of iron to phosphorus of 0.9637.

Amounts of phosphorus and aluminum elements in both the first filtrate containing the meta-aluminate ion and the phosphate ion obtained in the step (1) (i.e., before the removal of aluminum) and the second filtrate containing the phosphate ion obtained in the step (2) (i.e., after the removal of aluminum) were tested and the results are shown in Table 1 below.

**Table 1 Comparation of amounts of phosphorus and aluminum elements before and after the removal of aluminum**

| group | P (ppm) | Al (ppm) | Al removal rate (%) |
|---|---|---|---|
| first filtrate | 23023.33 | 1969.63 | - |
| second filtrate | 28582.5 | 87.42 | 95.56 |

Amounts of copper and titanium elements in both the third filtrate containing the iron ion, the titanium ion, and the copper ion obtained in the step (3) (i.e., before the removal of copper and titanium) and the fourth filtrate containing the ferrous ion obtained in the step (4) (i.e., after the removal of copper and titanium) were tested and the results are shown in Table 2 below.

**Table 2 Comparation of amounts of copper and titanium elements before and after the removal of copper and titanium**

| group | Cu (ppm) | Ti (ppm) | Cu removal rate (%) | Ti removal rate (%) |
|---|---|---|---|---|
| third filtrate | 33.93 | 186.37 | - | - |
| fourth filtrate | 0.02 | 2.13 | 99.94 | 98.86 |

Amounts of impurity elements (metal elements) in the anhydrous iron phosphate obtained in step (5) were tested and the results are shown in Table 3 below.

**Table 3 Amounts of impurity elements in anhydrous iron phosphate**

| Type of impurity elements | Al | Ca | Cd | Co | Cr | Cu | K |
|---|---|---|---|---|---|---|---|
| Amount of impurity elements (ppm) | 97.25 | 0.76 | 0.2 | 0.71 | 3.31 | 0.06 | 0 |
| Type of impurity elements | Mg | Mn | Na | Ni | Pb | Ti | Zn |
| Amount of impurity elements (ppm) | 1.24 | 2.77 | 5.23 | 3.15 | 15.98 | 0.71 | 0.82 |

It can be seen from the test results shown in Table 3 that amounts of all of the impurity elements in the anhydrous iron phosphate are less than 100 ppm.

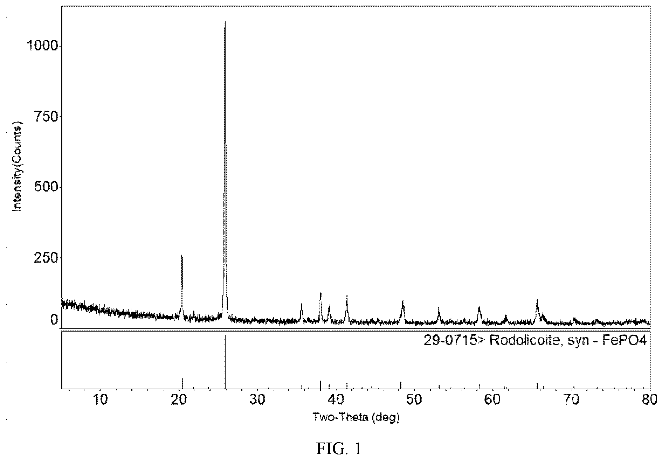

The anhydrous iron phosphate obtained in the step (5) was subjected to an XRD detection, and the results are shown in FIG. 1. As can be seen from FIG. 1, the anhydrous iron phosphate obtained by the present application is FePO₄ (JCPDF Card No.: 29-0715), and the purity of iron phosphate prepared in the present example was calculated to be 99.74% with a total impurity content of 0.26% according to the types and amounts of the impurity elements detected in Table 3.

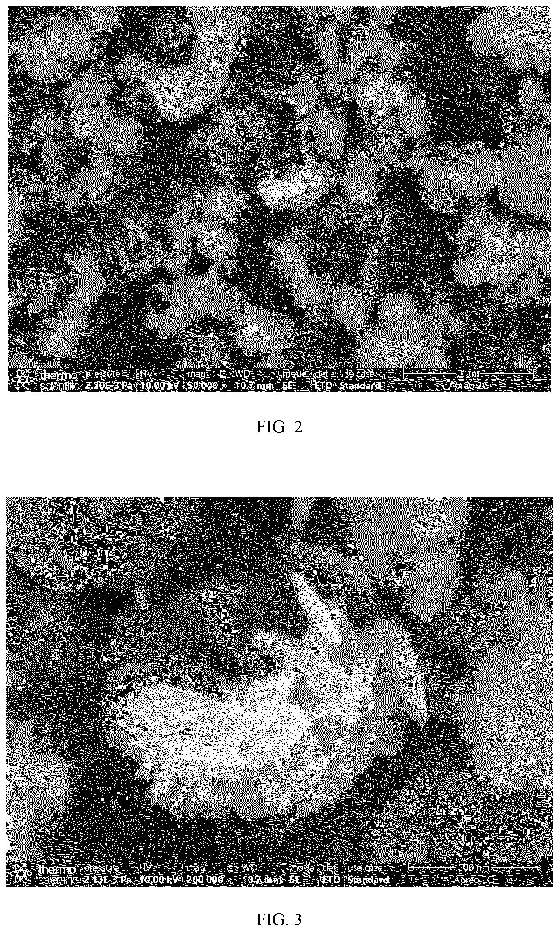

The anhydrous iron phosphate obtained in step (5) was subjected to a SEM detection, and the results are shown in FIG. 2 and FIG. 3. FIG. 2 shows the SEM image of iron phosphate at a magnification of 50,000 times, and FIG. 3 shows the SEM image of iron phosphate at a magnification of 200,000 times. It can be seen that the anhydrous iron phosphate obtained by the present application has a microstructure in form of nano-flake, and the particle size of a primary particle is about 400 nm.

### Example 2

A method for preparing iron phosphate from an iron phosphorus slag in this example includes the following steps:
(1) 100 g iron phosphorus slag was taken, placed into a KOH solution with a mass fraction of 8%, with a mass ratio of the iron phosphorus slag to the KOH solution being 1: 10, and pulped to be dispersed to carry out a rection at a temperature of 35°C for 3 h, followed by a solid-liquid separation, to obtain a residue and a first filtrate containing a meta-aluminate ion and a phosphate ion.
(2) Sulfuric acid with a mass fraction of 40% was added into the first filtrate containing the meta-aluminate ion and the phosphate ion obtained in the step (1), with the pH of the mixture material adjusted to 6.5±0.1, to carry out an aluminum-removing reaction, followed by a solid-liquid separation, to obtain an aluminum hydroxide residue and a second filtrate containing the phosphate ion (for subsequent use).
(3) The residue obtained in the step (1) was added and dissolved into a sulfuric acid solution with a molality of 1 mol/kg, with a molar ratio of the iron element in the residue to the hydrogen ion in the sulfuric acid solution being 1:3.1, to carry out a carbon-removing rection at a temperature of 60°C for 3 h, followed by a solid-liquid separation, to obtain a carbon residue and a third filtrate containing an iron ion, a titanium ion, and a copper ion.
(4) Iron powder was added to the third filtrate containing the iron ion, the titanium ion, and the copper ion obtained in the step (3) to carry out a titanium and copper-removing rection at a temperature of 75°C until the pH of the mixture material reached 2.5±0.2, followed by a solid-liquid separation, to obtain a fourth filtrate containing a ferrous ion and a mixed residue containing metallic copper and meta-titanic acid.
(5) A hydrogen peroxide aqueous solution was mixed well with the second filtrate containing the phosphate ion obtained in the step (2) to prepare a phosphate solution, which was then added dropwise into the fourth filtrate containing the ferrous ion obtained in the step (4), with a molar ratio of the phosphate ion in the second filtrate to the ferrous ion in the fourth filtrate being 1.5:1 and a molar ratio of the ferrous ion in the fourth filtrate to the hydrogen peroxide in the hydrogen peroxide aqueous solution being 1:0.55, to carry out a synthetic reaction of iron phosphate at a temperature of 80°C for 4h followed by a solid-liquid separation. Then the solid material was washed, dried, and sintered (a temperature of sintering being 700°C) to obtain anhydrous iron phosphate with a ratio of iron to phosphorus of 0.9701.

Upon testing and calculation, in this example, the Al removal rate in the step (2) was 96.01%, the Cu removal rate in the step (4) was 99.95%, and the Ti removal rate in the step (4) was 99.02%. Moreover, the contents of all impurity elements in the anhydrous iron phosphate obtained in the step (5) were less than 100 ppm.

### Example 3

A method for preparing iron phosphate from an iron phosphorus slag in this example includes the following steps:
(1) 100 g iron phosphorus slag was taken, placed into a NaOH solution with a mass fraction of 20%, with a mass ratio of the iron phosphorus slag to the NaOH solution being 1:5, and pulped to be dispersed to carry out a rection at a temperature of 80°C for 1 h, followed by a solid-liquid separation, to obtain a residue and a first filtrate containing a meta-aluminate ion and a phosphate ion.
(2) Hydrochloric acid with a mass fraction of 60% was added into the first filtrate containing the meta-aluminate ion and the phosphate ion obtained in the step (1), with the pH of the mixture material adjusted to 5.5±0.1, to carry out an aluminum-removing reaction, followed by a solid-liquid separation, to obtain an aluminum hydroxide residue and a second filtrate containing the phosphate ion (for subsequent use).
(3) The residue obtained in the step (1) was added and dissolved into a nitric acid solution with a molality of 2 mol/kg, with a molar ratio of the iron element in the residue to the hydrogen ion in the nitric acid solution being 1:4, to carry out a carbon-removing rection at a temperature of 70°C for 1.5 h, followed by a solid-liquid separation, to obtain a carbon residue and a third filtrate containing an iron ion, a titanium ion, and a copper ion.
(4) Iron powder was added to the third filtrate containing the iron ion, the titanium ion, and the copper ion obtained in the step (3) to carry out a titanium and copper-removing rection at a temperature of 85°C until the pH of the mixture material reached 3.0±0.2, followed by a solid-liquid separation, to obtain a fourth filtrate containing a ferrous ion and a mixed residue containing metallic copper and meta-titanic acid.
(5) A hydrogen peroxide aqueous solution was mixed well with the second filtrate containing the phosphate ion obtained in the step (2) to prepare a phosphate solution, which was then added dropwise into the fourth filtrate containing the ferrous ion obtained in the step (4), with a molar ratio of the phosphate ion in the second filtrate to the ferrous ion in the fourth filtrate being 1.3:1 and a molar ratio of the ferrous ion in the fourth filtrate to the hydrogen peroxide in the hydrogen peroxide aqueous solution being 1:0.75, to carry out a synthetic reaction of iron phosphate at a temperature of 90°C for 4h followed by a solid-liquid separation. Then the solid material was washed, dried, and sintered (a temperature of sintering being 550°C) to obtain anhydrous iron phosphate with a ratio of iron to phosphorus of 0.9723.

Upon testing and calculation, in this example, the Al removal rate in the step (2) was 95.72%, the Cu removal rate in the step (4) was 99.96%, and the Ti removal rate in the step (4) was 98.21%. Moreover, the contents of all impurity elements in the anhydrous iron phosphate obtained in the step (5) were less than 100 ppm.

### Comparative Example 1

A method for preparing iron phosphate from an iron phosphorus slag in this comparative example is substantially the same as that in Example 1, except that the pH of the mixture material was adjusted to 4.0±0.1 in the step (2).

Upon testing and calculation, in this comparative example, the Al removal rate in the step (2) was 42.32%, and the purity of iron phosphate prepared was 98.56%, with a total impurity content of 1.44%.

### Comparative Example 2

A method for preparing iron phosphate from an iron phosphorus slag in this comparative example is substantially the same as that in Example 1, except that the reaction temperature is 50°C instead in the step (4).

Upon testing and calculation, in this comparative example, in the step (4), the Cu removal rate was 95.45%, the Ti removal rate was 64.20%, and the purity of iron phosphate prepared was 99.45%, with a total impurity content of 0.55%.

Although the present application has been illustrated and described with the specific embodiments, it should be noted that the foregoing embodiments are merely intended for describing the technical solutions of the present application other than limiting the present application. Those skilled in the art would be appreciated that modifications can be made to the technical solutions described in the foregoing embodiments or equivalent replacements can be made to some of or all of technical features of the technical solutions described in the foregoing embodiments without departing from the sprit and the scope of the present application, and these modifications or replacements do not make the essence of their corresponding technical solutions deviate from the scope of the technical solutions of the embodiments of the present application. It is therefore intended to cover in the appended claims all such modifications or replacements that are within the scope of the present application.

## Claims

1. A method for preparing iron phosphate from an iron phosphorus slag, comprising the steps of:
(a) adding the iron phosphorus slag into an alkaline solution to carry out a reaction followed by a solid-liquid separation to obtain a residue and a first filtrate containing a meta-aluminate ion and a phosphate ion; adding an acid solution into the first filtrate to carry out an aluminum-removing reaction, and performing a solid-liquid separation after the aluminum-removing reaction is finished to obtain a second filtrate containing the phosphate ion;
(b) mixing the residue obtained in the step (a) with an acid solution to carry out a carbon-removing reaction followed by a solid-liquid separation to obtain a carbon residue and a third filtrate containing an iron ion, a titanium ion, and a copper ion;
(c) adding metallic iron into the third filtrate obtained in the step (b) to carry out a titanium and copper-removing reaction followed by a solid-liquid separation to obtain a fourth filtrate containing a ferrous ion;
(d) mixing an oxidant, the second filtrate containing the phosphate ion obtained in the step (a), and the fourth filtrate containing the ferrous ion obtained in the step (c) to carry out a reaction followed by a solid-liquid separation and a sintering process in sequence to obtain the iron phosphate;
wherein the iron phosphorus slag comprises a waste material obtained from a waste lithium iron phosphate battery after an extraction of lithium, and the iron phosphorus slag contains iron phosphate, aluminum hydroxide, metallic aluminum, carbon, metallic copper, copper oxide, and titanium oxide.

2. The method for preparing the iron phosphate from the iron phosphorus slag of claim 1, wherein in the step (a), a mass ratio of the iron phosphorus slag to the alkali solution is 1:3 to 1:10, preferably, 1:4 to 1:6;
preferably, in the step (a), a mass fraction of the alkali solution is 8% to 20%;
preferably, in the step (a), the alkali solution comprises a sodium hydroxide solution and/or a potassium hydroxide solution;
preferably, in the step (a), during the reaction of the iron phosphorus slag with the alkali solution, a temperature of a mixture material is 30°C to 80°C, and a time of the reaction is 1 h to 3 h.

3. The method for preparing the iron phosphate from the iron phosphorus slag of claim 1, wherein in the step (a), an acid used in the acid solution comprises at least one of sulfuric acid, hydrochloric acid, phosphoric acid, or nitric acid, preferably, phosphoric acid;
preferably, in the step (a), a mass fraction of the acid solution is 30% to 85%;
preferably, in the step (a), the acid solution is added until a pH of the mixture material is 5.0 to 7.5, preferably, 6.8 to 7.1.

4. The method for preparing the iron phosphate from the iron phosphorus slag of claim 1, wherein in the step (b), a molar ratio of an iron element in the residue to a hydrogen ion in the acid solution is 1:3.1 to 1:4;
preferably, in the step (b), the acid comprises at least one of sulfuric acid, hydrochloric acid, nitric acid, or phosphoric acid;
preferably, in the step (b), a molality of the acid solution is 1 to 3 mol/kg;
preferably, in the step (b), a temperature of the mixture material during the carbon-removing reaction is 60 to 80°C;
preferably, in the step (b), a time of the carbon-removing reaction is 1 to 3 h, preferably, 1 to 1.5 h.

5. The method for preparing the iron phosphate from the iron phosphorus slag of claim 1, wherein in the step (c), a temperature of the mixture material during the titanium and copper-removing reaction is 75 to 85°C;
preferably, in the step (c), the solid-liquid separation is performed once the mixture material in the titanium and copper-removing reaction has a pH of 2 to 4.2.

6. The method for preparing the iron phosphate from the iron phosphorus slag of claim 1, wherein in the step (d), the oxidant comprises at least one of a hydrogen peroxide aqueous solution, sodium peroxide, potassium peroxide, sodium persulfate, ammonium persulfate, or potassium persulfate;
preferably, in the step (d), a molar ratio of the ferrous ion in the fourth filtrate and hydrogen peroxide in the hydrogen peroxide aqueous solution is 1:0.55 to 1:0.75.

7. The method for preparing the iron phosphate from the iron phosphorus slag of claim 1, wherein in the step (d), a molar ratio of the phosphate ion in the second filtrate to the ferrous ion in the fourth filtrate is 1.05:1 to 1.5:1.

8. The method for preparing the iron phosphate from the iron phosphorus slag of claim 1, wherein in the step (d), a temperature of the mixture material during the reaction is 80 to 95°C; preferably, in the step (d), a time of the reaction is 2 to 6 h;
preferably, in the step (d), a temperature of the sintering process is 550 to 700°C.

9. An iron phosphate, prepared by the method for preparing iron phosphate from an iron phosphorus slag of any one of claims 1 to 8;
preferably, the iron phosphate has a ratio of iron to phosphorus of 0.96 to 0.98.

10. A cathode material for a lithium ion battery, comprising the iron phosphate of claim 9.
